# EUROPÄISCHE PATENTANMELDUNG

(11) **EP 2 998 212 A1**
(43) Veröffentlichungstag der Anmeldung: **23.03.2016**
(21) Anmeldenummer: 15176391.9
(22) Anmeldetag: 13.07.2015
(51) Int. Cl.: B62M 6/90

(54) **RAHMENELEMENT ZUR AUFNAHME EINES ENERGIESPEICHER ZUR VERWENDUNG BEI EINEM ZWEIRAD**

(30) Priorität: 18.09.2014 DE 202014007473 U
(71) Anmelder: ROBERT BOSCH GMBH, 70442 Stuttgart (DE)
(72) Erfinder: Jabs, Volker, 72144 Dusslingen (DE); Maier, Simone, 72070 Tuebingen (DE); Tenzer, Martin, 72622 Nuertingen (DE); Schumacher, Christoph, 72144 Dusslingen (DE)

(57) **Zusammenfassung**

Mit der vorliegenden Erfindung wird ein Rahmenelement (100,200,300,400,500,600,700,770) beansprucht, welches Teil eines Fahrradrahmens sein kann. Dieses Rahmenelement, z.B. ein Sattelrohr (60), ein Unterrohr (40) oder ein Oberrohr (50) des Fahrradrahmens, ist dazu vorgesehen, eine Energieversorgungseinheit (200), z.B. einen Akkumulator oder eine Batterie aufzunehmen, um damit den Antrieb eines Elektrofahrrads zu betreiben. Hierzu ist in dem Rahmenelement bzw. dem Rohr eine längliche Ausnehmung vorgesehen, so dass ein U-Profil entsteht. Der wesentlichen Kern der Erfindung besteht dabei darin, dass die Ausnehmung zusätzlich zum das U-Profil zur Aufnahme der Energieversorgungseinheit wenigstens zwei Böden auf unterschiedlichen Höhenniveaus aufweist.

## Beschreibung

Die Erfindung betrifft ein Rahmenelement zur Aufnahme einer Energiespeichereinheit für einen Fahrradrahmen, einen entsprechenden Fahrradrahmen, eine Energiespeichereinheit, die in dem Rahmenelement untergebracht werden kann sowie ein Fahrrad bei dem ein derartiges Rahmenelement verwendet wird.

### Stand der Technik

Bei der Nutzung von elektrisch betriebenen Fahrrädern besteht die Notwendigkeit, den zugehörigen Energiespeicher, z.B. einen Akkumulator am Fahrrad unterzubringen, möglichst ohne die Beweglichkeit des Fahrers einzuschränken. Üblicherweise wird der Energiespeicher am Fahrradrahmen, bestehend aus Unterrohr 40 und Sattelrohr 60 ggf. auch Oberrohr 50 befestigt. Dabei besteht gerade beim Sattelrohr 60 die Möglichkeit, den Energiespeicher im Rahmendreieck 40, 50 und 60 oder zwischen Sattelrohr 60 und Hinterrad, z.B. im hinteren Rahmendreieck bzw. hinter dem Sattelrohr anzubringen. In letzterem Fall vergrößert sich u. U. dabei der Abstand zwischen Tretkurbel und Hinterradachse, um genügend Platz für den meist voluminösen Energiespeicher zu schaffen. Eine weitere Möglichkeit der Unterbringung des Energiespeichers besteht darin, diesen am Gepäckträger zu befestigen.

Aus der Schrift EP 2 134 592 B1 ist die Befestigung einer Batterie am Unterrohr bekannt. Hierbei ist das Unterrohr aus Stabilitätsgründen als belastungstragendes, mehrräumiges Rohr mit einer Ausschneidung zum Empfang der Batterie ausgestaltet. Dabei ist vorgesehen, dass sich die seitlich offene Ausschneidung in wenigstens einem Raum im mehrräumigen Rohr erstreckt und wenigstens ein weiterer Raum im Wesentlichen intakt ist.

Weiterhin ist aus der EP 1 982 909 B1 eine Kombination aus Batterie und Fahrradrahmen bekannt, bei dem in einem der Rohre des Fahrradrahmens eine bzgl. der Seitenwand tiefgeschnittene Oberkante zur Erzeugung einer zum Teil seitlich offenen Aussparung vorgesehen ist, in die ein Rastrahmen eingesetzt werden kann. Dieser Rastrahmen wird vollständig in die Aussparung eingeführt, so dass er die nachträglich eingeführte Batterie vollständig umschließen kann.

Aus der DE 20 2013 008187 U1 ist eine Aufnahme eines Fahrradakkumulators in einem Rahmenelement bekannt, bei dem ein länglicher Einschnitt in einer planen Fläche eines Rohrs des Fahrradrahmens zur Aufnahme einer Energieversorgungseinheit vorgesehen ist.

### Offenbarung der Erfindung

Mit der vorliegenden Erfindung wird ein Rahmenelement beansprucht, welches Teil eines Fahrradrahmens sein kann. Dieses Rahmenelement, z.B. ein Sattelrohr, ein Unterrohr oder ein Oberrohr des Fahrradrahmens, ist dazu vorgesehen, eine Energieversorgungseinheit, z.B. einen Akkumulator oder eine Batterie aufzunehmen, um damit den Antrieb eines Elektrofahrrads zu betreiben. Hierzu ist in dem Rahmenelement bzw. dem Rohr eine längliche Ausnehmung vorgesehen, so dass ein U-Profil entsteht. Der wesentlichen Kern der Erfindung besteht dabei darin, dass die Ausnehmung zusätzlich zum das U-Profil zur Aufnahme der Energieversorgungseinheit wenigstens zwei Böden auf unterschiedlichen Höhenniveaus aufweist.

Durch die Einfügung eines zweiten Höhenniveaus kann eine geeignete Halterung bzw. Stützung geschaffen werden, so dass auch schmälere Energieversorgungseinheiten eingesetzt werden können, die nicht den ganzen Innenraum des Rahmenelements einnehmen. Darüber hinaus kann durch die unterschiedlichen Höhenniveaus gezielt die Steifigkeit und Belastbarkeit des Rahmenelements bzw. des U-Profils erhöht werden.

Die unterschiedlichen Höhenniveaus in der Ausnehmung lassen sich beispielsweise durch eine unterschiedliche Wandstärke des Bodens des U-Profils erreichen. Dabei kann die Verdickung zentral, d.h. mittig auf dem Boden entlang der Längsausrichtung der Ausnehmung angeordnet sein, wohingegen am Rand des Bodens eine dünnere Wandstärke vorliegt. Alternativ kann jedoch auch an den beiden Rändern des Bodens in länglicher Richtung der Ausnehmung eine Verdickung vorgesehen sein, wobei in diesem Fall darauf geachtet werden sollte, dass beide Wandstärken der Verdickung gleich sind, um ein einheitliches Höhenniveau zu erreichen. In beiden Fällen kann die Verdickung über die gesamte Länge der Ausnehmung vorgesehen sein. Alternativ kann jedoch auch vorgesehen sein, dass diese Verdickung nur abschnittsweise, z.B. nur bei einem Teil oder mit Unterbrechungen vorliegen. In einer besonderen Ausgestaltung ist diese Verdickung nicht komplett durchgängig, so dass sie zumindest auf einer Seite der Ausnehmung nicht bis zur begrenzenden Wand verläuft.

In einer Weiterbildung der Erfindung wird ein zweites Bodenniveau in der Ausnehmung dadurch erzeugt, dass ein T-Träger auf den Boden der Ausnehmung aufgebracht wird. Für eine optimierte Weiterleitung der Gewichtskraft des auf diesen T-Träger aufsetzenden Energiespeichers bzw. Halteelements an den darunter befindlichen Boden des Rahmenelements ist eine mittige Anordnung vorteilhaft. Auch dieser T-Träger kann längs entlang der gesamten Ausnehmung auf den Boden aufgebracht sein oder auch nur abschnittsweise, beispielsweise mit einem Abstand zu wenigstens einer Seite der Ausnehmung. Zur Befestigung des Trägers am Boden des Rahmenelements eignen sich insbesondere ein Verschweißen, ein Vernieten oder ein Verkleben. Alternativ ist jedoch auch möglich, den T-Träger mit dem zugrunde liegenden Rahmenelement einstückig auszubilden.

Gemäß einer anderen Ausgestaltung der Erfindung wird zumindest ein weiteres der unterschiedlichen Höhenniveaus der Böden in der Ausnehmung durch ein Einsatzelement gebildet, welches an den Seitenwänden befestigt wird. Dabei kann es sich beispielsweise um eine abknickende Aufnahme handeln, die in Form des einzusetzenden Energiespeichers oder eine Halteelements für diesen Energiespeicher ausgebildet ist. Auch bei dieser Ausgestaltung kann vorgesehen sein, dass das Einsatzelement derart angebracht wird, dass er einen Abstand zu wenigstens einer der Begrenzungswänden der Ausnehmung in Längsrichtung aufweist und somit keine mechanische Verbindung zu diesen Wänden herstellt. Durch einen derartigen Abstand lassen sich Einsatzelemente als Querstreben verwenden, die eine gewisse Torsionsfähigkeit des Rahmenelements ermöglicht, ohne die Stabilität des Gesamtsystems zu gefährden.

Darüber hinaus kann ein weiteres Einsatzelement verwendet werden, welches einen weiteren Boden mit einem weiteren Höhenniveau bildet. Dieses Einsatzelement sollte dabei ausgehend vom Boden der Ausnehmung bzw. des U-Profils höher als das eines anderen Einsatzelements angeordnet sein, wobei zumindest ein teilweiser Überlapp durchaus möglich ist. Alternativ kann aber auch eine Beabstandung in länglicher Richtung der Ausnehmung vorgesehen sein. Durch eine versetzte Anordnung kann dabei ein Verschieben des Energiespeichers im Betrieb verhindert werden. Darüber hinaus ist auch eine zusätzliche Stabilisierung des Rahmenelements gegenüber Schäden möglich, indem an verschiedenen Stellen ein Einsatzelement als Querstreben im U-Profil eingeführt werden.

In einer Weiterbildung der Erfindung ist vorgesehen, dass das wenigstens eine Einzelelement unterbrochen ist bzw. durch Löcher oder Öffnungen. Alternativ kann auch vorgesehen sein, dass mehrere Einzelelemente in einem Abstand parallel zueinander angeordnet sind und gemeinsam ein einheitliches Bodenniveau oberhalb des Bodens der Ausnehmung definieren.

Zusätzlich zu den vorstehend beschriebenen möglichen erfindungsgemäßen Ausführungen des Rahmenelements soll auch ein Fahrradrahmen bzw. ein Fahrrad beansprucht werden, der ein derartiges Rahmenelement aufweist. Dabei ist insbesondere vorgesehen, dass es sich bei dem Fahrrad um ein mittels eines separaten elektrisch betriebenen Fahrrads handelt. Dabei soll die Energieversorgungseinheit in das erfindungsgemäße Rahmenelement einfügbar sein, unbeachtet der Richtung. Dies bedeutet, dass die Energieversorgungseinheit sowohl von oben, von der Seite aber auch von unten einführbar sein soll. Bei einer besonderen Ausgestaltung des Rahmenelements ist sogar eine Einführung längs der Ausnehmung denkbar, beispielsweise indem das Rahmenelement das Sattelrohr repräsentiert und die Energieversorgungseinheit am Sattel entlang eingebracht werden kann.

Weitere Vorteile ergeben sich aus der nachfolgenden Beschreibung von Ausführungsbeispielen bzw. aus den abhängigen Patentansprüchen.

### Kurze Beschreibung der Zeichnungen

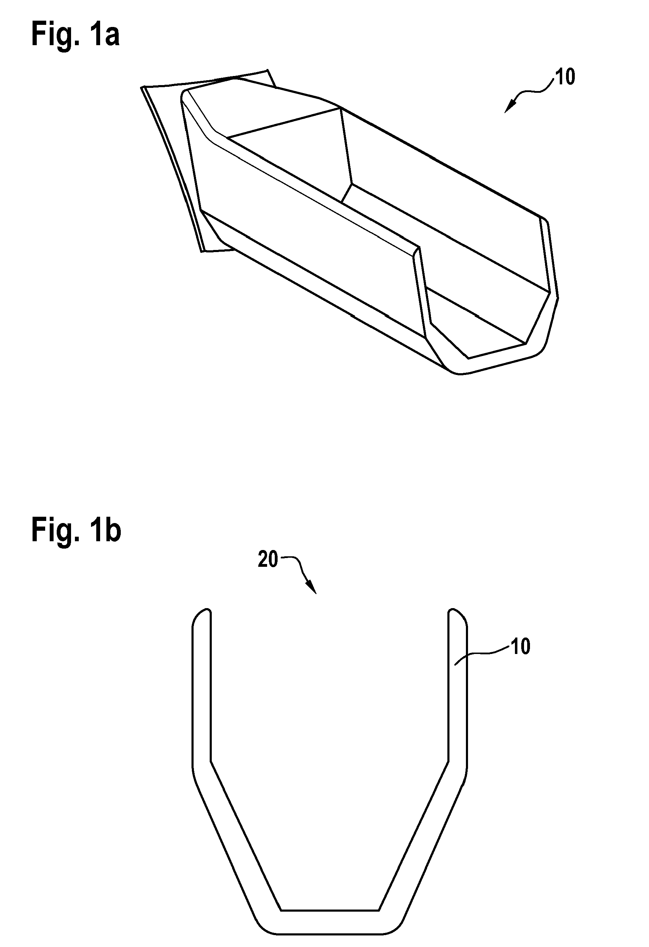

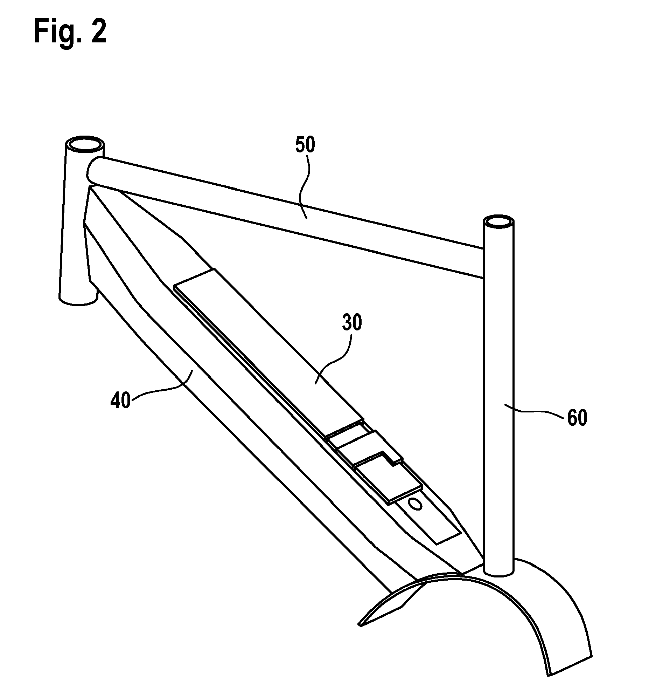

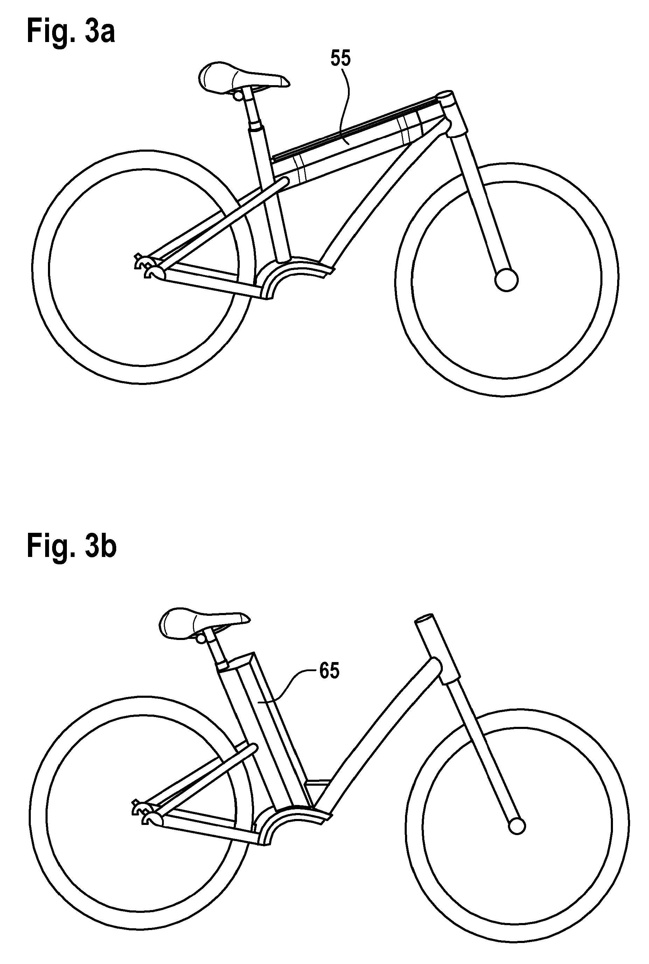

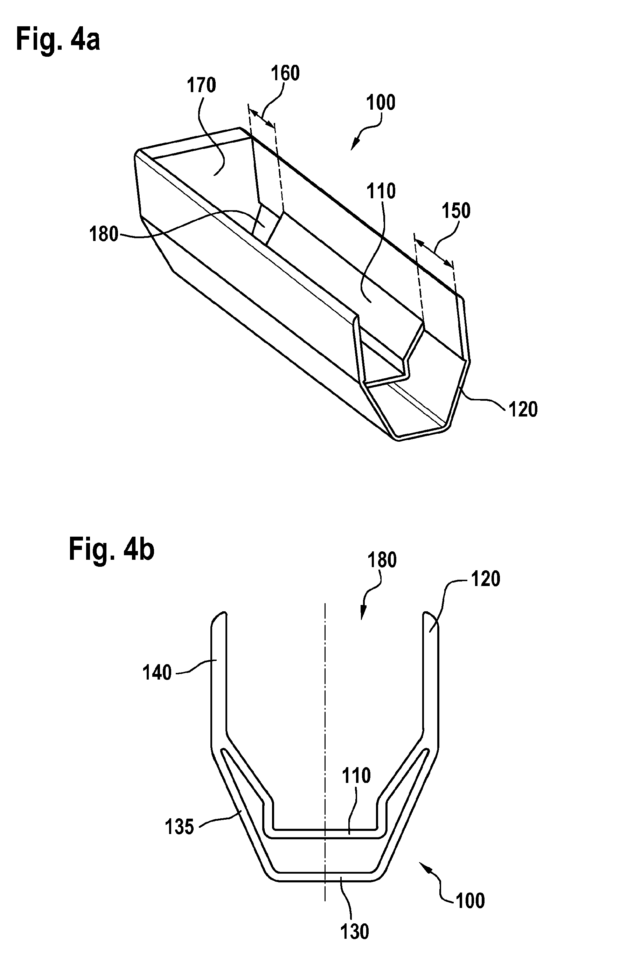

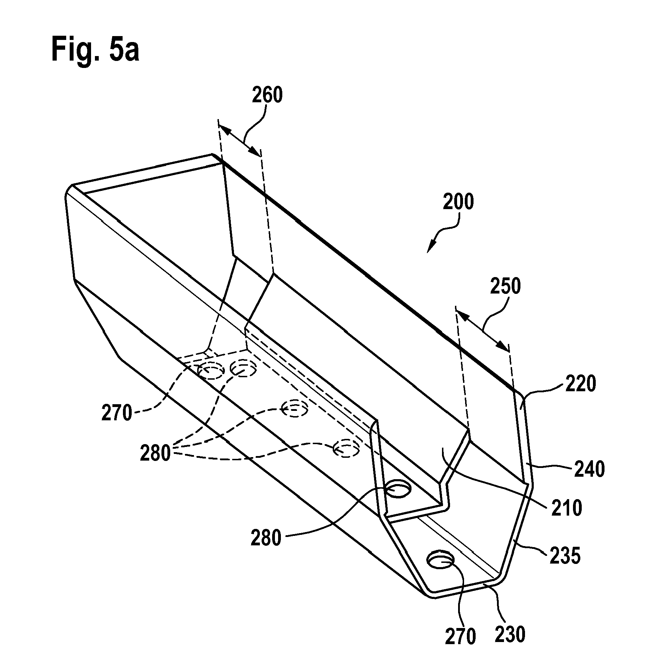

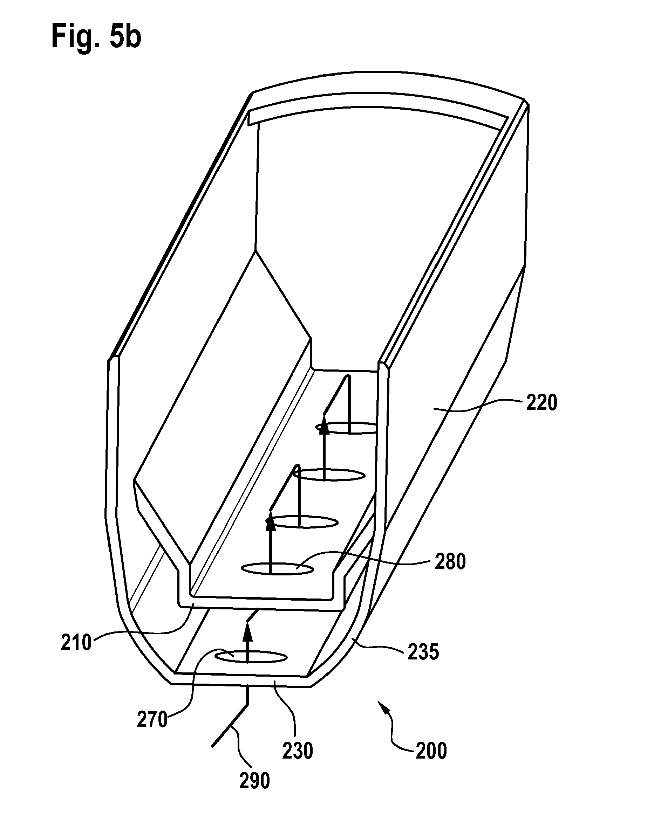

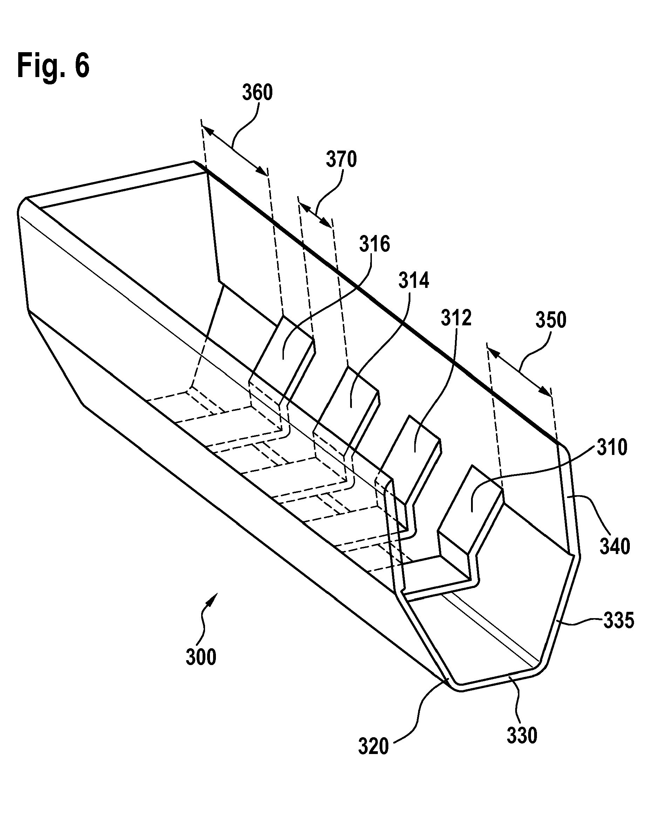

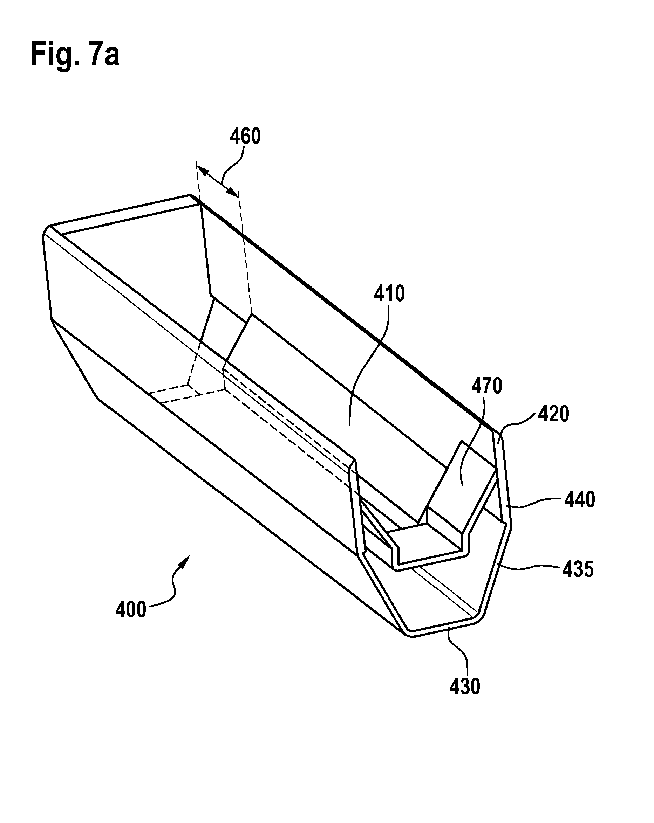

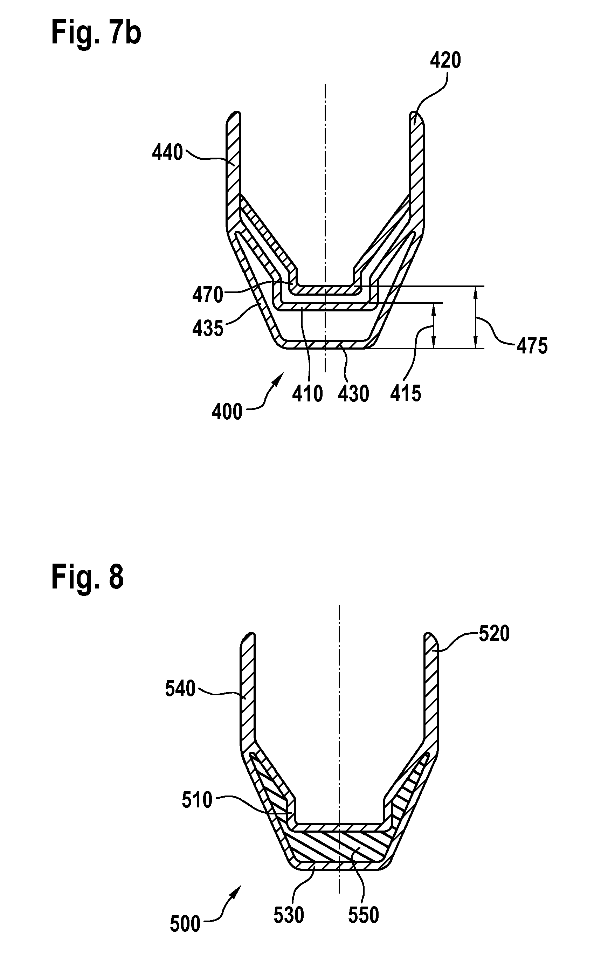

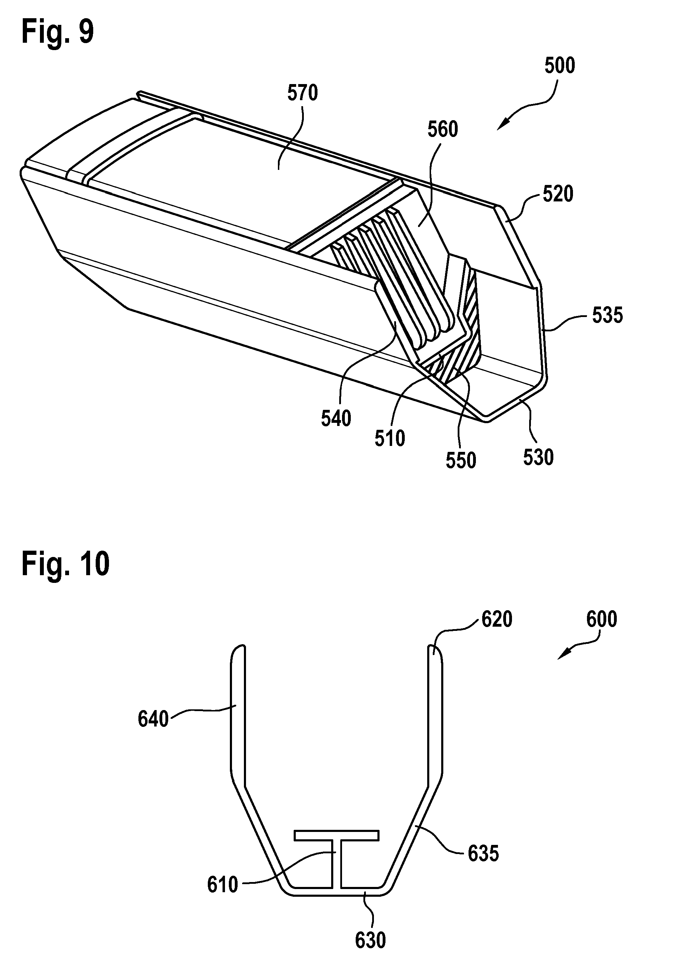

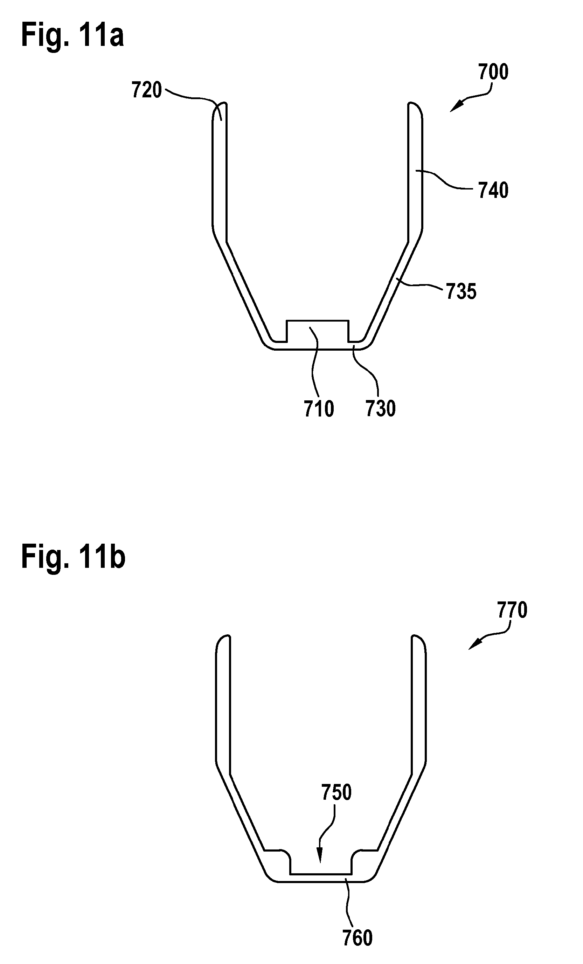

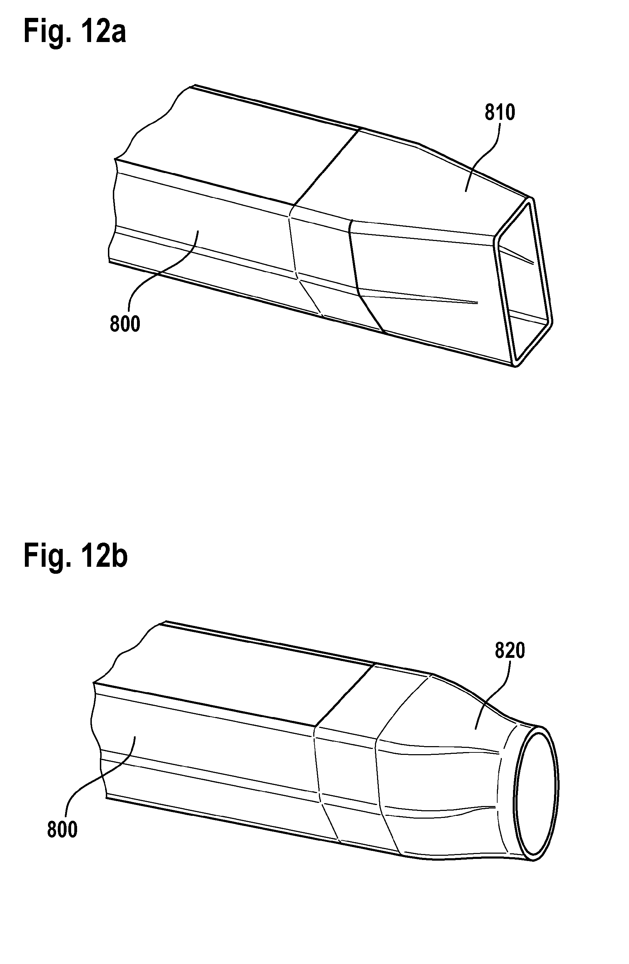

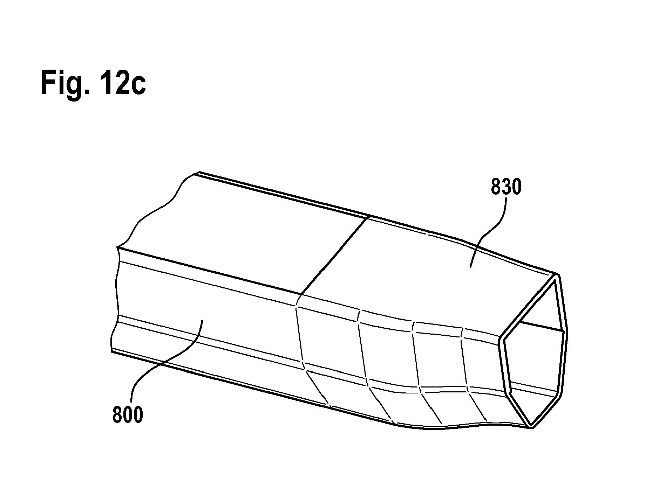

Die Figuren 1a und b zeigen eine U-förmige Ausgestaltung eines Rohres, welches beispielhaft bei einem Fahrradrahmen zur Aufnahme einer Energieversorgungseinheit vorgesehen ist. Eine Anordnung einer derartigen Aufnahme am Unterrohr des Fahrradrahmens ist in Figur 2 abgebildet. Die Figuren 3a bis c zeigen weitere beispielhafte Anordnung der Aufnahme an einem Fahrradrahmen. Mit den Figuren 4a und b wird ein erstes erfindungsgemäßes Ausführungsbeispiel gezeigt. Die Figuren 5a und b zeigen ein zweites erfindungsgemäßes Ausführungsbeispiel. In der Figur 6 ist ein drittes erfindungsgemäßes Ausführungsbeispiel dargestellt. Die Figuren 7a und b zeigen ein viertes erfindungsgemäßes Ausführungsbeispiel. Mit der Figur 8 wird eine Ergänzung zu den vorherigen Ausführungsbeispielen gezeigt. In der Figur 9 wird beispielhaft die Aufnahme der Energieversorgungseinheit im ersten Ausführungsbeispiel mittels eines zusätzlichen Halteelements dargestellt. Die Figuren 10, 11a und b stellen alternative Ausgestaltungen des Bodens des Fahrradrahmenrohres dar. In den Figuren 12a bis c sind verschiedene Anschlusstücke bzw. Endkappen des Fahrradrahmenrohrs abgebildet.

### Offenbarung der Erfindung

Wie eingangs bereits ausgeführt, werden bei den derzeit gebräuchlichen Elektrofahrrädern die für den Antrieb benötigten Energiespeicher typischerweise als Anbauprodukte an den vorgefertigten Fahrradrahmen vorgesehen. Um jedoch diese zusätzlichen Anbauten zu verhindern, die zudem auch teilweise den Fahrkomfort schmälern, z.B. indem zu wenig Anbaumöglichkeiten für Pumpe oder Trinkflaschen übrig bleiben, kann vorgesehen sein, den Energiespeicher als entfernbares Element in den Fahrradrahmen zu integrieren.

Eine mögliche Ausgestaltung eines Rahmenelements 10, der die Aufnahme einer Energiespeichereinheit ermöglicht, ist in den Figuren 1a und b dargestellt. Durch eine entsprechend Aufnahme 20 in dem U-förmigen Rahmenelement 10 kann so ein einfacher Einsatz der Energiespeichereinheit ermöglicht werden. Zusätzlich kann in das Rahmenelement 10 noch ein Halteelement eingefügt werden, welches die Energiespeichereinheit arretiert und kontaktiert, wie es beispielsweise in der DE 20 2013 008187 U1 oder DE 20 2014 005818 U1 gezeigt wird.

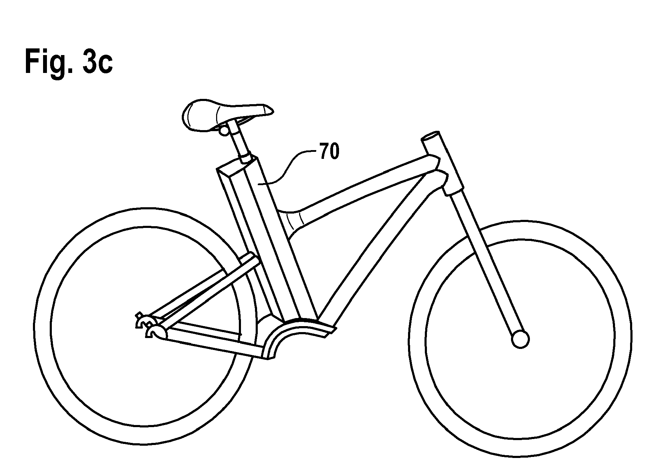

Ein derartig ausgestaltetes Rahmenelement 10 kann dabei als Unterrohr 40 zur Aufnahme eines Akkumulators 30 verwendet werden, wie es Figur 2 zeigt. Zum Austausch der Energieversorgungseinheit kann diese einfach nach oben entnommen werden. Alternativ kann die Aufnahme der Energieversorgungseinheit 30 jedoch auch im Oberrohr 50 oder im Sattelrohr 60 vorgesehen sein. So ist beispielhaft in der Figur 3a die Situation der Verwendung eines zur Aufnahme der Energieversorgungseinheit vorgesehenen Rahmenelements 55 als Oberrohr gezeigt. Vorteilhafterweise wird hier auch die Entnahme des Energiespeichers nach oben erfolgen. Alternativ ist aber auch durch eine entsprechende Drehung der Aufnahme eine seitliche Entnahme oder sogar eine Entnahme nach unten möglich, falls die Arretierung entsprechend vorgesehen ist. Die Figuren 3b und c zeigen alternative Anordnungen der Aufnahme von Energiespeichereinheiten in das Sattelrohr. Während in Figur 3b die Aufnahme in das Rahmenelement 65 vor dem Sattel erfolgt, ist in der Figur 3c das Rahmenelement 70 derart ausgestalten, dass der Energiespeicher von der Seite oder sogar von oben eingeführt werden kann. In beiden Fällen kann das Rahmenelement sowohl gleichzeitig die Funktion des Sattelrohrs übernehmen als auch separat zum Sattelrohr angeordnet sein.

Der wesentliche Kern der Erfindung besteht darin, dass zusätzlich zu dem reinen U-Profil 120 des Rahmenelements 100 ein Einsatzelement in Form eines Zwischenbodens 110 eingeführt wird, der auf einem höheren Niveau gegenüber dem Boden 130 des Rahmenelements 100 liegt und auf den die Energiespeichereinheit/der Akkumulator/die Batterie bzw. ein Halteelement für die Energiespeichereinheit/den Akkumulator/die Batterie aufgesetzt werden kann. Wie eingangs bereits erwähnt, kann dadurch die Stabilität und Robustheit des Belastung tragenden Rahmenelements 100 gesteigert werden.

Zur Verdeutlichung ist in den Figuren 4a und b ein erstes Ausführungsbeispiel der Erfindung dargestellt. In der U-förmigen Ausnehmung 180 bzw. Aufnahme des Rahmenelements 100, welche durch einen Boden 130 und Seitenwände 135 bzw. 140 gebildet wird, wird ein Einsatzelement bzw. ein Zwischenboden 110 eingebracht, der als Aufsitzelement für den Energiespeicher bzw. eine Halterung für den Energiespeicher dient. Dieser Zwischenboden 110 ist dabei derart ausgestaltet, dass er wenigstens teilweise parallel zum Boden 130 der U-förmigen Ausnehmung 180 angeordnet ist. Über abgewinkelte Aufhängungen ist dieser Zwischenboden 110 mit den Seitenwänden 135 und/oder 140 des Rahmenelements 100 verbunden. Die Verbindung kann dabei durch ein Verschweißen, ein Vernieten oder Verkleben erfolgen. Alternativ kann auch vorgesehen sein, dass der Zwischenboden 110 und das Rahmenelement 100 einstückig, z.B. als Gussstück erzeugt wird. Weiterhin ist vorgesehen, dass die abgewinkelte Aufhängung auf jeder Seite aus wenigstens zwei geraden Einzelelementen besteht, die in einem Winkel von 135 bis 160° miteinander verbunden sind. Eine derartig abgewinkelte Aufhängung ermöglicht es, das ebenfalls abgewinkelte untere Ende des U-förmigen Rahmenelements hinsichtlich der Flächen- und Volumennutzung besser auszunutzen, insbesondere wenn die Seitenwände 135 und 140 des Rahmenelements ebenfalls abgewinkelt miteinander verbunden sind. Besonders vorteilhaft ist die Flächen- und Volumennutzung realisiert, wenn beide abgewinkelten Geometrien aufeinander abgestimmt sind.

Wie aus der Figur 4a zu entnehmen ist, wird der Zwischenboden 110 nicht über den kompletten Boden 130 der Ausnehmung 180 angeordnet. Es ist vielmehr vorgesehen, dass der Zwischenboden 110 zumindest von einem Ende (siehe beispielhaft die Wand 170) der Ausnehmung 180 beabstandet angeordnet ist (siehe den Abstand 150 vor bzw. den Abstand 160 hinter dem Zwischenboden). Neben einer besseren Luftzirkulation, die u.a. zur Kühlung der Energiespeichereinheit sinnvoll ist, lässt sich so auch eine einfachere Reinigung durchführen. Darüber hinaus können auch unter dem Zwischenboden 110 elektrische Leitungen verlegt werden, um den Energiespeicher mit dem restlichen elektrischen Antrieb des Fahrrads zu verbinden. Auch hier ist ein leichterer Zugang zu diesen elektrischen Leitungen durch die Beabstandung möglich, beispielsweise bei einer Reparatur.

Optional kann bei dieser aber auch bei den nachfolgenden Ausführungsformen vorgesehen sein, dass statt eines durchgehenden Zwischenbodens 110 rechts und links an der Seitenwand L-förmige Aufnahmen angebracht sind (nicht gezeigt). Hierdurch kann trotz einer Bereitstellung der Auflage für den Energiespeicher ein noch leichterer Durchgriff auf den Boden des U-Profils ermöglicht werden.

Weiterhin kann auch alternativ zur Figur 4a bzw. b vorgesehen sein, dass das U-förmige Profil eine runde Ausgestaltung hat. Hierbei wird der Zwischenboden so untergebracht, dass er einen möglichst breiten Aufsatz für die Energieversorgungseinheit bzw. ein entsprechendes Halteelement aufweist (nicht gezeigt).

Die weiteren Ausführungsbeispiele basieren auf dem Grundtypus der Figuren 4a und 4b, wobei einzelne Variationen eingeführt werden. So werden in dem zweiten Ausführungsbeispiel 5a bzw. 5b in dem Boden 230 des U-Profils 220 des Rahmenelements 200 Löcher bzw. Öffnungen 270 eingebracht (ein oder mehrere weitere Öffnungen können längs des Bodens 230 eingebracht werden, sind jedoch in der Figur 5a nicht gezeigt). Alternativ oder zusätzlich können auch in dem Boden des Einsatzelements bzw. Zwischenbodens 210, welcher wie bereits im vorherigen Ausführungsbeispiel an den Seitenwänden 235 bzw. 240 befestigt ist, Löcher bzw. Öffnungen 280 eingebracht werden. Durch diese Löcher 270 bzw. 280 kann ein Luftstrom 290, z.B. von außen, geführt werden, mittels dem der Energiespeicher gekühlt werden kann. Hierbei ist darauf zu achten, dass der Energiespeicher nicht direkt auf dem Boden des Zwischenbodens 210 aufliegt, z.B. indem er auf den abknickenden Seitenwänden des Zwischenbodens 210 aufliegt oder auf seiner Unterseite Rippen mit geführten Grabenstrukturen aufweist. Alternativ kann auch ein Halteelement vorgesehen sein, wie es beispielhaft in der DE 20 2014 005818 U1 beschrieben wird, welches auf seiner Unterseite Rippen mit Grabenstrukturen zur Führung von elektrischen Leitungen und/oder Luftströmungen aufweist. Darüber hinaus erlauben auch in diesem Ausführungsbeispiel die Abstände 250 bzw. 260 vor bzw. hinter dem Zwischenboden 210 eine Führung des Luftstroms bzw. eine Luftverwirbelung zur Kühlung des Energiespeichers.

Ein drittes Ausführungsbeispiel ist in der Figur 6 dargestellt. Dabei wird ebenfalls das Rahmenelement 300 durch ein U-Profil 320 dargestellt, welches einen Boden 330 und Seitenwände 235 bzw. 340 aufweist. Im Gegensatz zu den vorherigen Ausführungsbeispielen ist hierbei jedoch vorgesehen, mehrere Einsatzelemente bzw. Zwischenböden 310 bis 316 anzubringen, die gemeinsam den Aufsatz des Energiespeichers bzw. des Halteelements für den Energiespeicher auf einem höheren Niveau gegenüber dem Boden 330 bilden. Alle Zwischenböden 310 bis 316 sind parallel in Längsrichtung der Aufnahme im Rahmenelement 300 voneinander beabstandet, vorteilhafterweise in einem äquidistanten Abstand 370. Optional kann auch vorgesehen sein, dass nur der erste und letzte Zwischenboden 310 und 316 vorhanden ist. Wie bereits bei den vorherigen Ausführungsbeispielen, ist ein Abstand 350 und/oder 360 zwischen den Zwischenböden und dem Ende der Ausnehmung vorgesehen. Es sei ausdrücklich darauf hingewiesen, dass auch bei diesem Ausführungsbeispiel optional Löcher oder Öffnungen im Boden 330 des U-Profils 320 vorgesehen sein können, um eine Belüftung du Kühlung gemäß dem zweiten Ausführungsbeispiel zu erreichen.

Gemäß einem vierten Ausführungsbeispiel eines erfindungsgemäßen Rahmenelements 400, welches in der Figur 7a bzw. um Querschnitt der Figur 7b dargestellt ist, kann neben einer ersten Art von Einsatzelementen bzw. Zwischenboden 410 eine zweite Art von Einsatzelementen bzw. Zwischenboden 470 vorgesehen sein. Diese zweite Art von Zwischenboden 470 kann dabei unabhängig von der ersten Art des Zwischenbodens 410 etwas oberhalb von diesem, d.h. höher angeordnet sein, wie es der Querschnitt in Figur 7b zeigt. Durch diese Anordnung kann ein Verrutschen des Energiespeichers bzw. eines entsprechenden Halteelements in der Ausnehmung verhindert werden, wenn die zweite Art von Zwischenböden 470 im Bereich des vorderen oder hinteren Endes der ersten Art von Zwischenböden 410 angebracht ist. Zu diesem Zweck sollte der Abstand 475 zum Boden 430 des U-Profils 420 wenigstens um die Dicke des Bodens der ersten Art von Zwischenboden 410 größer als der Abstand 415 sein.

Bei der Anordnung der beiden Arten von Zwischenböden in Längsrichtung der Ausnehmung kann ein zumindest teilweiser Überlapp vorliegen aber auch eine Anordnung mit einem Abstand. Darüber hinaus kann diese zweite Art von Zwischenböden 470 ebenfalls eine Abstand zu den Enden der Ausnehmung aufweisen. Alternativ kann die zweite Art von Zwischenböden auch direkt an die Wand anschließen oder sogar mit ihr verbunden sein.

Zu erwähnen sei, dass sowohl die erste Art als auch die zweite Art von Zwischenböden an den Seitenwänden 435 bzw. 440 des U-Profils 420 befestigt werden kann.

Weiterhin kann vorgesehen sein, dass zumindest einem der Zwischenböden der zweiten Art eine Arretierung bzw. eine elektrische Kontaktierung für die Energiespeichereinheit bzw. das Halteelement zugeordnet ist. Dies kann dadurch realisiert werden, dass auf dem Zwischenboden zweiter Art ein Schloss oder ein Kontaktierungsstecker angebracht ist.

Um die Steifigkeit bzw. die Festigkeit des Rahmenelements gegen die typischen Beanspruchungen eines Fahrradrahmens, bei dem ein derartiges Rahmenelement zum Einsatz kommt, zu erhöhen, kann vorgesehen sein, das Volumen zwischen dem U-Profil 520 des Rahmenelements 500, bestehend aus Boden 530 und Seitenwänden 535 bzw. 540, und dem Einsatzelement bzw. Zwischenboden 510 mit einem entsprechenden Material 550 wenigstens teilweise zu verfüllen. Denkbar sind hier neben Duroplasten auch eine Ausgestaltung des Volumens als Vollmaterial, bestehend aus dem Material des Rahmenelements.

In der Figur 9 wird beispielhaft die Verwendung eines Halteelements 560 für einen Akkumulator 570 gezeigt, welches auf einem Zwischenboden 510 aufsitzt. Unterhalb des Zwischenbodens ist ein Füllmaterial 550 eingebracht, welches zusätzlich oder alternativ zu den vorstehend erwähnten Funktionen der Erhöhung der Steifigkeit auch dazu genutzt werden kann, das Halteelement 560 bzw. den Energiespeicher/den Akkumulator 570 zu kühlen bzw. die erzeugte Wärme abzutransportieren.

Mit einem fünfte Ausführungsbeispiel wird gemäß der Figur 10 gezeigt, dass die Bereitstellung von Böden mit unterschiedlichen Höhenniveaus in der Ausnehmung des Rahmenelements 600 auch in Form eines T-Trägers 610 erzeugt werden kann. Dabei ist dieser T-Träger 610 vorzugsweise mittig auf dem Boden 630 des U-Profils 620 angebracht. Eine Befestigung an einem der Seitenwände 635 bzw. 640 ist nicht notwendig. Hinsichtlich der Kraftverteilung hat dieses Ausführungsbeispiel gewisse Vorteile, da die Gewichtskraft des Energiespeichers direkt senkrecht nach unten auf den T-Träger 610 wirkt. Wie bereits bei den bisherigen Ausführungsbeispielen kann auch hier vorgesehen sein, dass der T-Träger nicht auf der gesamten Länge des Bodens 630 angeordnet ist und jeweils zu den Enden der Ausnehmung einen Abstand aufweist. Alternativ kann aber auch vorgesehen sein, dass der T-Träger 610 durchgehend am Boden 630 angeordnet ist. Hierbei können ebenfalls unterhalb des Bodens des T-Trägers 610 die Zwischenräume zur Verlegung von elektrischen Leitungen genutzt werden.

Optionale weitere Ausgestaltungen, ggf. in Kombination mit einem der vorhergehenden Ausführungsformen, sind in den Figuren 11a und b dargestellt. In dem Rahmenelement 700 gemäß der Figur 11a wird der Boden 730 des U-Profils 740 partiell verdickt, um so eine höhere Auflageebene für den Energiespeicher bzw. ein Halteelement und somit ein zweites Höhenniveau bereit zu stellen. Diese Verdickung 710 ist dabei vorteilhafterweise zentral in der Mitte des Bodens 730 vorgesehen und benötigt ebenfalls wie im vorgenannten Ausführungsbeispiel keine Befestigung an der Wand 735 bzw. 740 des U-Profils. Auch bei dieser Ausführung kann die Verdickung sowohl durchgehend längs der Ausnehmung vorgesehen sein, aber auch unterbrochen oder mit einem Abstand zu wenigstens einem Ende der Aufnahme.

Die Ausgestaltung des Bodens 760 gemäß dem Ausführungsbeispiel nach Figur 11 b stellt im Wesentlichen die negative Ausgestaltung der Ausführung nach Figur 11a dar. Hierbei wird eine zentrale Vertiefung 750 in den Boden 760 des U-Profils eingebracht. Durch die übrig gebliebenen Wülste an beiden Seiten des Bodens wird so eine weiterer Boden definiert, auf dem der Energiespeicher bzw. das Halteelement aufsitzen kann. In der Vertiefung 750, die sowohl durchgehend längs entlang der Ausnehmung verlaufen kann als auch nur abschnittsweise, können elektrische Leitungen verlegt werden. Die Verdickungen an den Seiten des Bodens 760 ermöglichen eine Erhöhung der Stabilität des Rahmenelements 770 mit minimalem Materialeinsatz.

Zur Befestigung der vorstehend beschriebenen Rahmenelemente können unterschiedliche Anschlusstücke verwendet werden, um den Übergang vom U-förmigen Rahmenelement zu den üblichen röhrenförmigen Rahmenelementen herzustellen. So kann der Übergang in ein rechteckiges Anschlussstück 810 gemäß der Figur 12a, in ein rundes Anschlussstück 820 gemäß der Figur 12b oder ein vieleckiges Anschlussstück 830, welches dem U-Profil mit einem Deckel entspricht, vorgesehen sein.

Es sei darauf ausdrücklich darauf hingewiesen, dass diese Erfindung auch die Kombination der Merkmale der einzelnen Ausführungsbeispiele beansprucht.

## Patentansprüche

1. Rahmenelement (100, 200, 300, 400, 500, 600, 700, 770) für einen Fahrradrahmen,
welches zur Aufnahme einer Energieversorgungseinheit (200), insbesondere eines Akkumulators, geeignet ist,
wobei das Rahmenelement (100, 200, 300, 400, 500)
• ein Sattelrohr (60), ein Unterrohr (40) oder ein Oberrohr (50) repräsentiert, und
• wenigstens abschnittsweise ein U-Profil, bestehend aus wenigstens einem Bodenelement und zwei ersten Seitenwänden, mit einer länglichen Ausnehmung zur Aufnahme der Energieversorgungseinheit aufweist,
**dadurch gekennzeichnet, dass**
die Ausnehmung im U-Profil wenigstens zwei Böden auf unterschiedlichen Höhenniveaus aufweist.

2. Rahmenelement (600, 700, 770) nach Anspruch 1, **dadurch gekennzeichnet, dass** ein erster Boden durch eine erste Wandstärke des Bodenelement und ein zweiter Boden durch eine zweite Wandstärke des Bodenelementes gebildet wird, wobei die zweite Wandstärke eine Verdickung der ersten Wandstärke in wenigstens einem Bereich des Bodenelements darstellt.

3. Rahmenelement (600, 700, 770) nach Anspruch 2, **dadurch gekennzeichnet, dass** sich die Verdickung im zentralen Bereich des Bodenelements befindet.

4. Rahmenelement (600, 700, 770) nach Anspruch 2, **dadurch gekennzeichnet, dass** sich die Verdickung jeweils am länglichen Rand des Bodenelements befindet.

5. Rahmenelement (600, 700, 770) nach einem der vorhergehenden Ansprüche, **dadurch gekennzeichnet, dass** die Verdickung des Bodenelements nur in einem Teil der länglichen Ausnehmung vorliegt, wobei insbesondere vorgesehen ist, dass die Verdickung wenigstens auf einer Seite vom Ende der Ausnehmung beabstandet ist.

6. Rahmenelement (600, 700, 770) nach Anspruch 1, **dadurch gekennzeichnet, dass** der zweite Boden durch einen T-Träger gebildet wird, der insbesondere mittig auf dem Bodenelement angeordnet ist.

7. Rahmenelement (600, 700, 770) nach Anspruch 6, **dadurch gekennzeichnet, dass** der T-Träger nur in einem Teil der länglichen Ausnehmung vorliegt, wobei insbesondere vorgesehen ist, dass der T-Träger wenigstens auf einer Seite vom Ende der Ausnehmung beabstandet ist.

8. Rahmenelement (100, 200, 300, 400, 500) nach Anspruch 1, **dadurch gekennzeichnet, dass** der zweite Boden durch wenigstens ein Einsatzelement (110, 210, 310, 312, 314, 316, 410, 470, 510) gebildet wird, der an den Seitenwänden befestigt ist, wobei insbesondere vorgesehen ist, dass das wenigstens eine Einsatzelement auf wenigstens einer Seite vom Ende der Ausnehmung beabstandet ist.

9. Rahmenelement (400) nach Anspruch 8, **dadurch gekennzeichnet, dass** wenigstens ein drittes Bodenniveau durch ein weiteres Einsatzelement (470) gebildet wird.

10. Rahmenelement (600, 700, 770) nach Anspruch 8 oder 9, **dadurch gekennzeichnet, dass** Boden, der durch das wenigstens eine Einsatzelement (210) gebildet wird, wenigstens teilweise unterbrochen ist, insbesondere durch Löcher oder durch abschnittsweise Öffnungen.

11. Fahrradrahmen mit einem Rahmenelement nach einem der Ansprüche 1 bis 10, wobei das Rahmenelement ein Sattelrohr (60), ein Unterrohr (40) oder ein Oberrohr (50) repräsentiert, welches wenigstens abschnittsweise ein U-Profil, bestehend aus wenigstens einem Bodenelement und zwei ersten Seitenwänden, mit einer Ausnehmung zur Aufnahme der Energieversorgungseinheit aufweist,
**dadurch gekennzeichnet, dass**
die Ausnehmung im U-Profil wenigstens zwei Böden auf unterschiedlichen Höhenniveaus aufweist.

12. Fahrrad, insbesondere ein elektrisch antreibbares Fahrrad, mit einem Fahrradrahmen nach Anspruch 11 oder einem Rahmenelement nach einem der Ansprüche 1 bis 10,
wobei das Rahmenelement ein Sattelrohr (60), ein Unterrohr (40) oder ein Oberrohr (50) repräsentiert, welches wenigstens abschnittsweise ein U-Profil, bestehend aus wenigstens einem Bodenelement und zwei ersten Seitenwänden, mit einer Ausnehmung zur Aufnahme der Energieversorgungseinheit aufweist,
**dadurch gekennzeichnet, dass**
die Ausnehmung im U-Profil wenigstens zwei Böden auf unterschiedlichen Höhenniveaus aufweist.

13. Fahrrad nach Anspruch 12, **dadurch gekennzeichnet, dass** in dem Rahmenelement ein Halteelement zur Halterung einer Energieversorgungseinheit vorgesehen ist, welches wenigstens teilweise auf dem erhöhten Boden aufsitzt.
